(19) 

Europäisches
Patentamt
European
Patent Office
Office européen
des brevets

(11) **EP 1 061 500 B1**

(12) **EUROPEAN PATENT SPECIFICATION**

(45) Date of publication and mention
of the grant of the patent:
**10.11.2010 Bulletin 2010/45**

(51) Int Cl.:
***G09G 5/02*** (2006.01)   ***G09G 3/20*** (2006.01)

(21) Application number: **00305126.5**

(22) Date of filing: **16.06.2000**

(54) **Color correction in image display**

Farbkorrektur in einem Bildanzeigegerät

Correction de couleur dans un dispositif d'affichage d'images

(84) Designated Contracting States:
**DE FR GB**

(30) Priority: **18.06.1999 JP 17225499**

(43) Date of publication of application:
**20.12.2000 Bulletin 2000/51**

(60) Divisional application:
**10009969.6**
**10010474.4**

(73) Proprietor: **Seiko Epson Corporation**
**Shinjuku-ku**
**Tokyo 163-0811 (JP)**

(72) Inventor: **Koyama, Fumio**
**Suwa-chi,**
**Nagano-ken 392-8502 (JP)**

(74) Representative: **Mabey, Katherine Frances**
**Dehns**
**St Bride's House**
**10 Salisbury Square**
**London**
**EC4Y 8JD (GB)**

(56) References cited:
**EP-A- 0 402 137     US-A- 5 359 342**

- **PATENT ABSTRACTS OF JAPAN vol. 1999, no. 09, 30 July 1999 (1999-07-30) & JP 11 113019 A (SONY CORP), 23 April 1999 (1999-04-23)**
- **PATENT ABSTRACTS OF JAPAN vol. 017, no. 621 (P-1645), 16 November 1993 (1993-11-16) & JP 05 197357 A (MATSUSHITA ELECTRIC IND CO LTD), 6 August 1993 (1993-08-06)**

**EP 1 061 500 B1**

**Description**

The present invention relates to an image display for displaying color images.

Various types of displays have been developed for displaying color images, including the direct viewing and projection types. The direct viewing display uses a liquid crystal panel, plasma display panel (PDP), CRT or the like to display an image that the viewer views directly. The projection display is equipped with a projection lens, various optical systems and a display device such as a liquid crystal panel, digital micromirror device (DMD, trademark of Texas Instruments Inc.) or CRT. An image formed on the display device is projected onto a screen, for instance, for viewing.

Ideally, the image displayed by a color display is uniform, i.e., totally free of unevenness. Actually, however, unevenness sometimes arises in the displayed image for reasons that will now be discussed.

When a liquid crystal panel is used as the display device, image data are applied to the individual pixels of the liquid crystal panel to vary the transmittance and reflectance of the pixels with respect to illumination light projected onto the panel. The light projected onto the panel exits from the panel as image-bearing light. To ensure that images are displayed with no unevenness, the transmittance and reflectance characteristics of the liquid crystal should be the same at every pixel. In an actual liquid crystal panel, however, they vary to some extent. The color of the displayed image is therefore sometimes uneven. Color unevenness also occurs when other types of display devices are used, owing to non-uniformity of the various display characteristics.

Display devices like the liquid crystal panel and the digital micromirror device require a separate optical system for projecting illumination light. Colour unevenness may be produced in the displayed image depending on the luminance and colour distribution of the light from the illumination optical system.

In the case of a projection display, colour unevenness sometimes arises in the displayed image for reasons related to the characteristics of the display's various optical systems.

EP 0,402,137 discloses a method for compensating for colour unevenness in a projection type display device. The independent claims are characterised over EP 0,402,137.

US 5,359,342 discloses a method for providing a display conforming to a predetermined luminance profile.

Accordingly, an object of the present invention is to provide a technology for suppressing colour unevenness in displayed images.

In order to attain at least one of the above and other objects of the present invention, there is provided an image display method in accordance with claim 1 and an image display apparatus in accordance with claim 5.

The image display apparatus can reduce color unevenness of the displayed image because, when the image processing unit outputs image data representing a uniform image of a prescribed color, the level of the image data applied to the individual pixels in accordance with their positions in the image display device is corrected to reduce difference in chromaticity of exiting light among the pixels.

The gain corrector corrects the levels of all but a specific one of the plural color component data applied to the pixels to reduce difference in level between the specific color component data and the other color component data.

This configuration reduces difference in chromaticity of exiting light among the pixels without making the luminance of the light exiting from the pixels of the image display device the same at all pixels.

The specific color component data is the type of color component data that makes the greatest contribution to the luminance of the light for forming the image.

This configuration suppresses color unevenness while also suppressing to some extent scatter in the luminance of the light for forming the image-bearing light exiting from the pixels.

When the plural color component data are red, green and blue component data and the specific color component data may be the green component data.

Among red, green and blue, green makes the greatest contribution to luminance. This configuration therefore suppresses color unevenness while also suppressing to some extent scatter in the luminance of the light for forming the image-bearing light exiting from the pixels.

The plurality of pixels may be segmented into a plurality of small areas of polygonal shape. In this case, correction values for apex pixels corresponding to apexes of the small blocks are determined in advance, and correction values of pixels other than the apex pixels in each small areas are interpolated from the correction values of the apex pixels of the small area.

This configuration enables the correction values of the pixels in each small area to be interpolated from apex pixel correction values calculated in advance. The number of pixels whose correction values are calculated in advance can therefore be reduced. As a result, the operations for calculating correction values in advance can be simplified and the device for storing the data representing the calculated correction values can also be simplified.

The plurality of pixels may segmented into the plurality of small areas by drawing a horizontal line through a center pixel among the multiple pixels, drawing a vertical line through the center pixel, and drawing the sides of a rhombus whose apexes are the extremities of the horizontal line and the vertical line.

Color unevenness generally has a distribution spreading from the center to the periphery of the image. This configuration effectively suppresses color unevenness distributed in this manner.

The present invention can be implemented in various ways, such as image display apparatus and method, a computer program therefor, a computer program product including the computer program, a data signal embodied in a carrier wave including the computer program.

These and other objects, features, aspects, and advantages of the present invention will become more apparent from the following detailed description of the preferred embodiments which is given by way of example only and in conjunction with the accompanying drawings.

Fig. 1 is a block diagram schematically illustrating an image display 1000 that is a first embodiment of this invention.

Fig. 2 is a block diagram schematically illustrating a gain corrector 120.

Figs. 3(A) and 3(B) show color unevenness correction.

Fig. 4 is a block diagram schematically illustrating a gain corrector of an image display that is a second embodiment of this invention.

Fig. 5 shows division of areas.

Figs. 6(A) and 6(B) show conditions used to discriminate whether a pixel position (x, y) output by a correction timing controller 210 is present in a first area or a second area.

Figs. 7(A) and 7(B) show gain calculation for pixels present in first and second areas conducted in a gain calculator 270.

Fig. 8 is diagram concerning the areas for explaining examples of correction gain interpolation equations and constants stored in a constant table 220A.

Figs. 9(A) and 9(B) show other area division patterns.

Fig. 10 shows still another area division pattern.

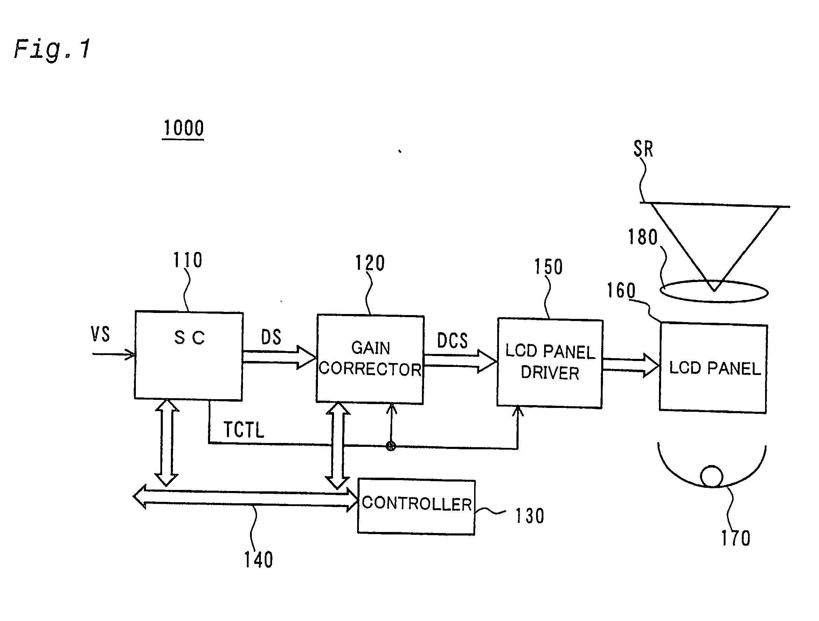

Fig. 1 is a block diagram schematically illustrating an image display 1000 that is a first embodiment of this invention. The image display 1000 comprises a scan converter (SC) 110, a gain corrector 120, a controller 130, a liquid crystal panel driver 150, liquid crystal panels 160, an illumination optical system 170 and a projection optical system 180. The image display 1000 is a projector which displays images by projecting red, green and yellow light exiting from the liquid crystal panels 160 at every pixel onto a projection screen SR through the projection optical system 180. The structure of the liquid crystal panel 160, illumination optical system 170 and projection optical system 180 are described in assignee's Japanese Patent Laid-Open Gazette No. 10-171045.

The controller 130 is connected to the SC 110 and the gain corrector 120 through a bus 140. The controller 130 sets the processing conditions of the different sections and directly controls the processing of every section.

The SC 110 outputs a timing signal TCTL used to form an image on the liquid crystal panel 160. The timing signal TCTL ordinarily includes a vertical synchronizing signal VD, a horizontal synchronising signal HD and a clock signal DCLK. The SC 110 also outputs a given image signal VS as an image signal DS in a form suitable for input to the liquid crystal panel 160. The image data composing the image signal DS include one 24-bit data set for each pixel. The data sets are output serially pixel by pixels. The image data set of each pixel consists of 8 bits of color data for each of red, green and blue. For convenience in explanation, the image data contained in the image signal DS will hereafter sometimes be referred to as "image data DS."

As explained in further detail later, the gain correction 120 subjects the image signal DS received from the SC 110 to gain correction in accordance with the positions of the pixels. The gain-corrected image data DCS is supplied to the liquid crystal panel driver 150. The liquid crystal panel driver 150 supplies the image data DCS to the liquid crystal panel 160 under timing control by the timing signal TCTL. The liquid crystal panel 160 modulates illumination light from the illumination optical system 170 in accordance with the supplied image data DCS. The projection optical system 180 projects the light modulated by the liquid crystal panel 160 onto the projection screen SR, thereby displaying an image.

The liquid crystal panel 160 thus corresponds to the image display device of the present invention, while the SC 110 corresponds to the image processor of the invention and the gain corrector 120 corresponds to the gain corrector of the invention.

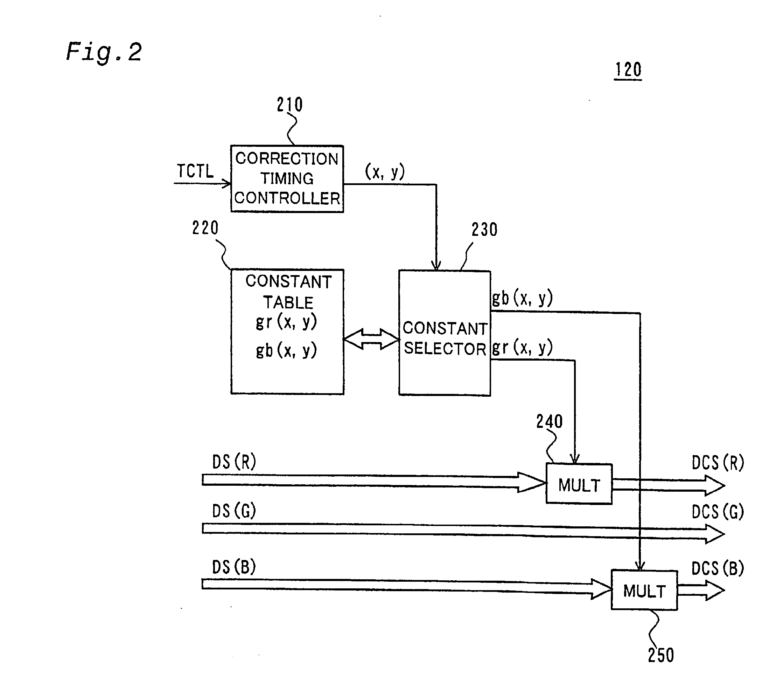

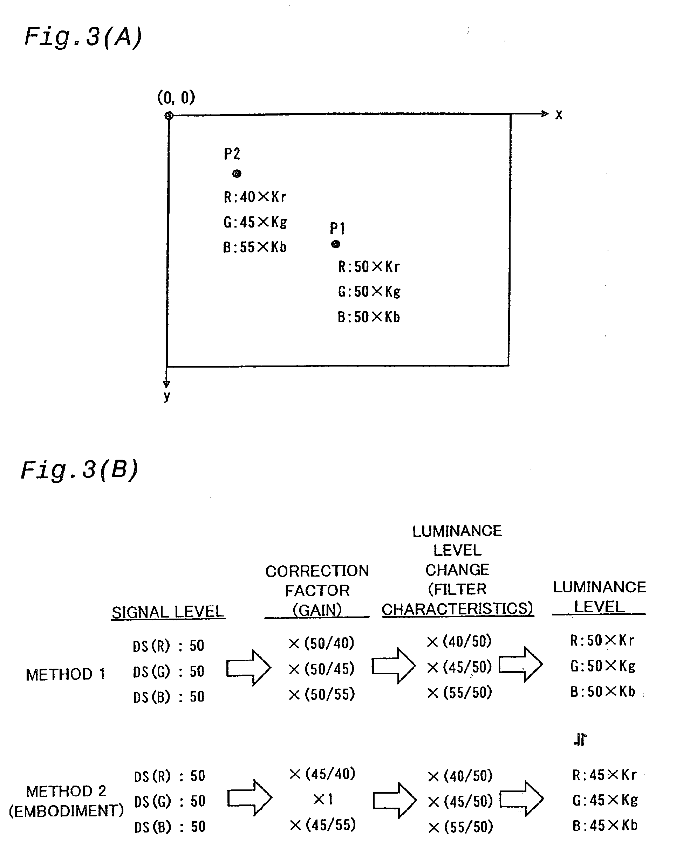

Fig. 2 is a block diagram schematically illustrating the gain corrector 120. The gain corrector 120 comprises a correction timing controller 210, a constant table 220, a constant selector 230, a red multiplier 240 and a blue multiplier 250. The constant table 220 stores red and blue correction gains gr(x, y) and gb(x, y) for each pixel. As shown in Fig. 3(A), the position of each pixel of the liquid crystal panel, which comprises multiple pixels in a matrix array, is defined by the value of (x, y) in an orthogonal coordinate system whose origin (0, 0) is defined as the pixel at the left edge in the horizontal direction and the upper edge in the vertical direction; $\underline{x}$ represents position in the horizontal direction and $\underline{y}$ position in the vertical direction.

The correction timing controller 210 uses the given timing signal TCTL to calculate the position (x, y) of the pixel to which the image data DS received from the SC 110 is to be applied. The constant selector 230 selects the correction gains gr(x, y), gb(x, y) corresponding to the calculated pixel position (x, y) from the constant table 220 and supplies the red correction gain gr(x, y) to the red multiplier 240 and the correction gain gb(x, y) to blue multiplier 250.

The red multiplier 240 multiplies the input red image data DS(R) by gr(x, y) and outputs the product as red image data DCS(R). The blue multiplier 250 multiplies the input blue image data DS(B) by gb(x, y) and outputs the product as blue image data DCS(B). The green image data DS(G) is output unchanged as image data DCS(G).

In the image display 1000, since the image represented by the image data DCS corrected by the gain corrector 120 is formed on the liquid crystal panel 160, the color unevenness that tends to arise in the displayed image can be suppressed as explained in the following.

Figs. 3(A) and 3(B) illustrate methods of color unevenness correction. To make the explanation easier, the levels of the color image data are defined as falling between 0 and 100. The red luminance level range is defined as 0Kr to 100Kr, the green luminance level range as 0Kg to 100Kg, and the blue luminance level range as 0Kb to 100Kb. The coefficients Kr, Kg and Kb indicate the contribution of the light of the color concerned to the luminance of light exiting from the pixels. Their values are Kr≒0.299, Kg≒0.587 and Kb≒0.114. If red, green and blue each has an image data level of 50, representing a gray image, the red, green and blue luminance levels of the image to be displayed are defined as 50Kr, 50Kg and 50Kb.

Fig. 3(A) illustrates occurrence of color unevenness in the case of applying the pixels with gray image data, i.e., image data in which each of red, green and blue has a level of 50. Specifically, the red, green and blue luminance levels at pixel P1 are 50Kr, 50Kg and 50Kb, which are the color luminance levels that should be displayed, but at pixel P2 the luminance level of red is 40Kr, the luminance level of green is 45Kg, and the luminance level of blue is 55Kb, because of the characteristics of the pixel P2. Color unevenness is therefore present.

The situation is equivalent to a filter that multiplies red by (40/50), green by (45/50) and blue by (55/50) being present at pixel P2. This leads to the conclusion that the color unevenness of Fig. 3(A) can be suppressed by Method 1 shown in Fig. 3(B) which is not in accordance with the invention. In Method 1, the image data levels are corrected in advance so as to cancel out the luminance level changes produced by the equivalent filter. Specifically, the red, green and blue image data sets are multiplied by the reciprocals of the respective equivalent filter color gains (40/50), 45/50) and 55/50), i.e., by (50/40), (50/45) and (50/55). By this, the luminance levels disregarding the coefficients, (hereafter referred to simply as "luminance levels") are corrected to 50 for all colors. As Method 1 can correct the luminance level of each color to its proper value, it can suppress color unevenness. Correction by Method 1 is complicated, however, because the image data sets for all possible colors have to be corrected.

In accordance with the present invention, therefore, color unevenness is suppressed by Method 2. Method 2 defines the luminance level of green as a reference and effects correction for making the luminance levels of red and blue equal to that of green. Specifically, the red image data set is multiplied by the ratio of the green luminance level to the red luminance level (45/40), and the blue image data set is multiplied by the ratio of the green luminance level to the blue luminance level (45/55), thus making the luminance level of all colors equal to the green luminance level of 45.

Hue and saturation of each color can be defined by chromaticity. In suppressing color unevenness, therefore, it suffices to make the chromaticity of the pixels experiencing color unevenness equal to the proper chromaticity. Taking only chromaticity into consideration, one can see that among lights differing in luminance there exist ones that are the same in chromaticity. For instance, the chromaticity of light whose individual colors have a luminance of 50 and the chromaticity of light whose individual colors have a luminance of 45 are in principle the same and the two lights are displayed as the same color, notwithstanding that they differ in luminance. In other words, Method 2 suppresses color unevenness by effecting correction of the image data applied to the pixels so that, when an image of uniform color is displayed, all pixels are made equal in color irrespective of change in luminance level. Although Method 2 may result in luminance scatter (luminance unevenness), it can achieve the same suppression of color unevenness as Method 1. Unlike Method 1, which requires correction of three sets of color data for suppression of color unevenness, Method 2 requires correction of only two color data sets and is therefore advantageous to Method 1 in ease of correction. Moreover, Method 2 can be implemented using a gain correction that is structurally simply than would be needed for implementing Method 1.

As was noted above, Method 2 may produce luminance unevenness. As explained in the following, however, this is not a problem in practical application.

The human eye is less sensitive to luminance unevenness than color unevenness. Further, while it is somewhat sensitive to changes in the luminance level of light from nearby sources, it is insensitive to changes in the luminance level of light from relatively distance sources. As color unevenness generally has a rather gradual distribution, the luminance unevenness caused by the changes in luminance produced when color unevenness is suppressed by Method 2 therefore also has a rather gradual distribution. Luminance unevenness is therefore not strongly perceived. Furthermore, as was pointed out earlier, the rates at which red, green and blue contribute to the luminance of the light exiting from the pixels are Kr≒0.299, Kg≒0.587 and Kb≒0.114, with the contribution of green being the greatest. Since Method 2 defines green, the color making the largest contribution to luminance, as the reference, it holds the effect of luminance change to the very minimum. For the foregoing reasons, luminance unevenness produced by Method 2 causes substantially no problem in practical application.

Method 2 was explained with regard to the case of adjusting the luminance levels of red and blue light to the luminance level of green light but either red or blue can be used the reference instead. Still, in view of the fact that green has the greatest effect on luminance among the three colors, green is preferably adopted as the reference. In a case where color images are formed using a combination of colors other than the three primary colors (red, green and blue), the same effects can be obtained by selecting one of the colors as a reference, particularly by selecting the color among them that has the greatest effect on luminance.

The correction gains gr(x, y) and gb(x, y) stored in the constant table 220 correspond to the ratio of pixel green luminance level to red luminance level and the ratio of pixel green luminance level to blue luminance level in Method 2. The gains are determined in the following manner:

i) Image data representing a uniform gray image are output from the SC 110.
ii) The chromaticity of each pixel is measured while varying the correction gains gr and gb applied to the multipliers 240 and 250 (Fig. 2) until the chromaticity of the pixel becomes equal to the proper gray chromaticity to be displayed.
iii) The correction gains gr and gb when the chromaticity of the pixel becomes equal to the proper gray chromaticity are stored in the constant table 220 as gr(x, y) and gb(x, y) for position (x, y) of the pixel.

The procedure for determining the correction gains is not limited to the steps i) to iii) set out above. In i), an image of a color other than gray can be displayed instead of the uniform gray image. However, the image should preferable be of a color including red, green blue. Although the chromaticity of every pixel is measured in ii), the procedure is not limited to this. For example, it is possible instead to measure the chromaticity of a pixel region consisting of multiple pixels including a prescribed pixel to be measured and to use the measured chromaticity as the chromaticity of the prescribed pixel. This method is convenient because it is difficult to measure the chromaticity of individual pixels. Any procedure can be adopted that, during display of an image of uniform color, enables the correction gains of every pixel to be determined so as to reduce any difference between the chromaticity of the pixel and the chromaticity of the color desired to be displayed.

As explained in the forgoing, the image display 1000 according to this embodiment is configured so that, during display of an image of uniform color, the image data supplied to the liquid crystal panel 160 can be corrected in the gain corrector 120 so that the light exiting from every pixel is made to have the same chromaticity. It can therefore suppress color unevenness.

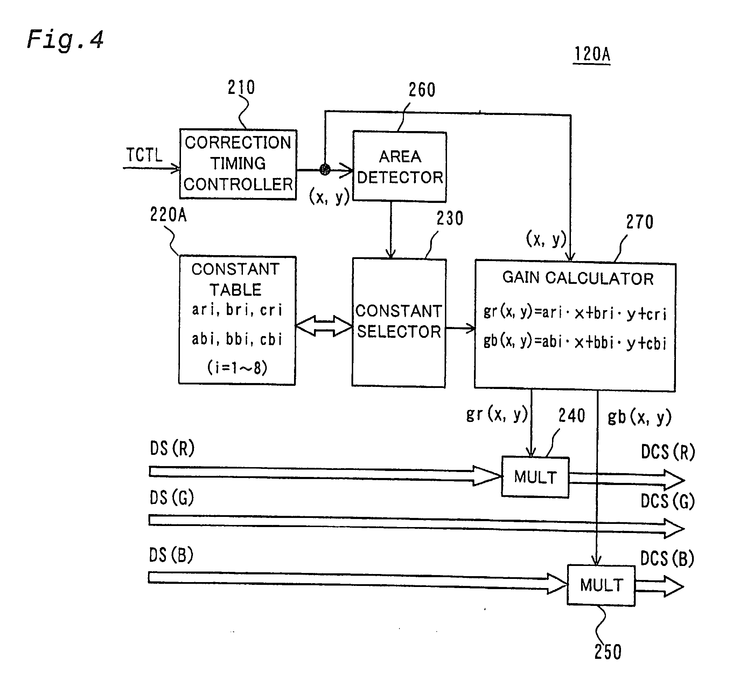

Fig. 4 is a block diagram schematically illustrating a gain corrector 120A of a second embodiment of this invention. An image display similar to that of the first embodiment can be configured by replacing the gain corrector 120 of the first embodiment with this gain corrector 120A.

The gain corrector 120A comprises a correction timing controller 210, a constant table 220A, a constant selector 230, a red multiplier 240, a blue multiplier 250, an area detector 260 and a gain calculator 270.

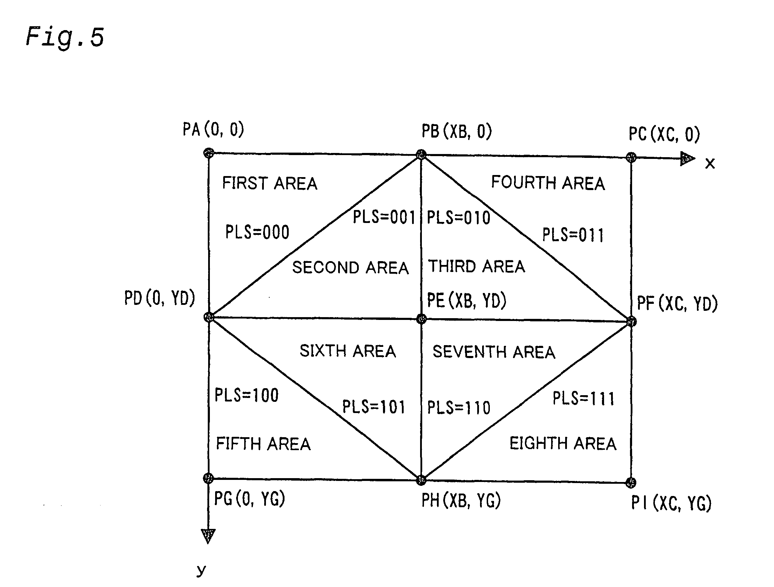

The area detector 260 detects a segment (hereinafter called an "area" or "plane") that includes the pixel position (x, y) calculated by the correction timing controller 210. The meaning of "area" will be explained with reference to Fig. 5. Among multiple pixels arrayed in a matrix, designate those at the four corners as PA, PC, PG and PI, designate the center pixel as PE, designate the pixels at the left and right ends of the horizontal line passing through the center pixel PE as PD and PF, and designate the pixels at the upper and lower ends of the vertical line passing through the center pixel PE as PB and PH. Draw a vertical line connecting the pixels PB, PE and PH, draw a horizontal line connecting the pixels PD, PE and PF, and draw the sides of a rhombus having PB, PD, PH, and PF as apexes. This divides the matrix into eight right triangular regions (areas). Call the regions of the triangles PAPBPD, PBPEPD, PBPFPE, PBPCPF, PDPHPG, PDPEPH, PEPFPH and PFPIPH the first, second, third, fourth, fifth, sixth, seventh and eighth areas. Designate the positions of the pixels by coordinates (x, y) in a coordinate system whose vertical axis is $y$, horizontal axis is $x$, and origin is the pixel PA. In Fig. 5, the positions of the pixels PB, PC, PD, PE, PF, PG, PH are PI are defined as (XB, 0), (XC, 0), (0, YD), (XB, YD), (XC, YD), (0, YG), (XB, YG), (XC, YG).

The area detector 260 discriminates the area in which the pixel position (x, y) given by the correction timing controller 210 is present. The method of this discrimination will now be explained. As can be seen in Fig. 5, the pixel belongs to an area in the right half when x ≥ XB and to an area in the left half when x < XB. Further, the pixel belongs to an area in the lower half when y ≥ YD and to an area in the upper half when y < YD. Based on this, the area detector 260 discriminates that the area in which the pixel position (x, y) given by the correction timing controller 210 is present is the first or second area when x < XB and y < YD, is the third or fourth area when x ≥ XB and y < YD, is the fifth or sixth area when x < XB and y ≥ YD, and is the seventh or eighth area when x ≥ XB and y ≥ YD.

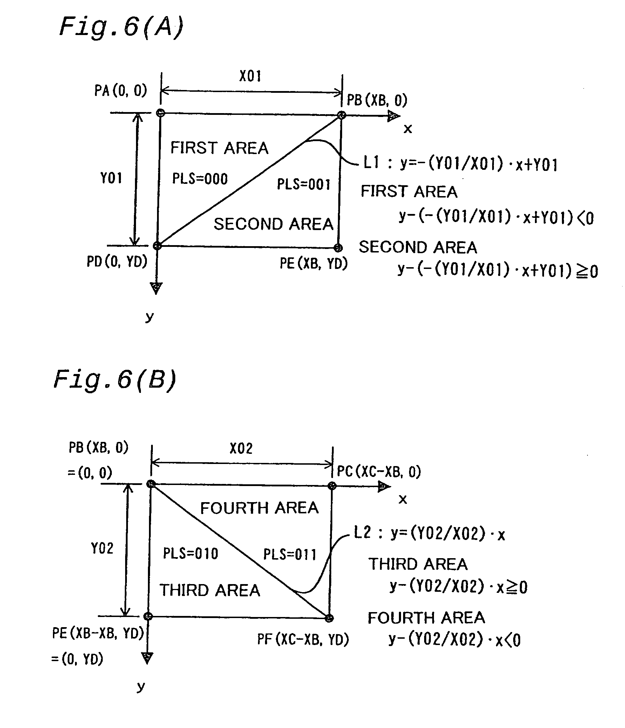

When the area detector 260 has discriminated that the pixel position (x, y) given by the correction timing controller 210 is located in the first or second area, it next discriminates which of these areas it is in. Figs. 6(A) and 6(B) show conditions used to discriminate whether the area in which the pixel position (x, y) given by the correction timing controller 210 is present is the first area or the second area. When, as shown in Fig. 6(A), the number of pixels between pixel PA and pixel PB is defined as X01 (= XB - 0) and the number of lines between pixel PA and pixel PD is defined as Y01 (= YD - 0), the boundary line L1 between the first area and the second area can be represented by Equation (1):

$$y - \{- (Y01/X01) \cdot x + Y01\} = 0 \quad \ldots (1)$$

Equation (1) is therefore used to discriminate between the first area and the second area as shown by Equation (2a) and Equation (2b):

$$\text{First area:} \quad y - \{- (Y01/X01) \cdot x + Y01\} < 0 \ldots (2a)$$

$$\text{Second area:} y - \{- (Y01/X01) \cdot x + Y01\} \geq 0 \ldots (2b)$$

When the result of the discrimination is the first area, the area detector 260 outputs three bits of binary data PLS = 000 (decimal number: 0) as area data PLS. When the result is the second area, it outputs area data PLS = 001 (decimal number: 1).

Discrimination between the third area and fourth area is conducted as follows. As shown in Fig. 6(B), pixel PB is defined as the origin (0, 0). The number of pixels between pixel PB and pixel PC is defined as X02 (= YD - 0) and the number of lines between pixel PB and pixel PE is defined as Y02 (= XC - XB - 0). The boundary line L2 between the third area and the fourth area can then be represented by Equation (3):

$$y - (Y02/X02) \cdot x = 0 \quad \ldots (3)$$

Equation (3) is therefore used to discriminate between the third area and the fourth area as shown by Equation (4a) and Equation (4b):

$$\text{Third area:} \quad y - (Y02/X02) \cdot x \geq 0 \ldots (4a)$$

$$\text{Fourth area:} \quad y - (Y02/X01) \cdot x < 0 \ldots (4b)$$

When the result of the discrimination is the third area, the area detector 260 outputs area data PLS = 010 (decimal number: 2). When the result is the fourth area, it outputs PLS = 011 (decimal number: 3).

Discrimination between the fifth area and the sixth area is carried out similarly to that between the third area and the fourth area while the pixel PD is used as the origin (0, 0). The number of pixels between pixel PD and pixel PE is defined as X03 (= XB - 0) and the number of lines between pixel PD and pixel PG is defined as Y03 (= YG - YD - 0). The discrimination is then made as shown by Equation (5a) and Equation (5b):

$$\text{Fifth area:} \quad y - (Y03/X03) \cdot x \geq 0 \quad \ldots (5a)$$

$$\text{Sixth area:} \quad y - (Y03/X03) \cdot x < 0 \quad \ldots (5b)$$

When the result of the discrimination is the fifth area, the area detector 260 outputs area data PLS = 100 (decimal number: 4). When the result is the sixth area, it outputs PLS = 101 (decimal number: 5).

Discrimination between the seventh area and the eighth area is carried out similarly to that between the first area and the second area. Specifically, pixel PE is defined as the origin (0, 0). The number of pixels between pixel PE and pixel PF is defined as X04 (= XC - XB - 0) and the number of lines between pixel PE and pixel PH is defined as Y04 (= YG - YD - 0). The discrimination is then made as shown by Equation (6a) and Equation (6b):

$$\text{Seventh area:} \quad y - \{-\ (Y04/X04) \cdot x + Y04\} < 0 \quad \dots (6a)$$

$$\text{Eighth area:} \quad y - \{-\ (Y04/X04) \cdot x + Y04\} \geq 0 \quad \dots (6b)$$

When the result of the discrimination is the seventh area, the area detector 260 outputs area data PLS = 110 (decimal number: 6). When the result is the eighth area, it outputs PLS = 111 (decimal number: 7).

The area detector 260 can thus detect the area including the pixel to be corrected in the foregoing manner.

Constants $ar_1$, $br_1$, $cr_i$, $ab_i$, $bb_1$ and $cb_i$ (i = 1 - 8) for use in gain calculation by the gain calculator 270 are stored in the constant table 220A of Fig. 4 for each area.

The constant selector 230 receives the area data PLS indicating the area discriminated by the area detector 260, selects the corresponding constants $ar_i$, $br_i$, $cr_1$, $ab_i$, $bb_1$ and $cb_1$ from the constant table 220A, and supplies them to the gain calculator 270.

The gain calculator 270 determines the correction gain for every pixel in the discriminated area (segment pixel) by linear interpolation from the correction gains of the pixels at the area apexes (apex pixels).

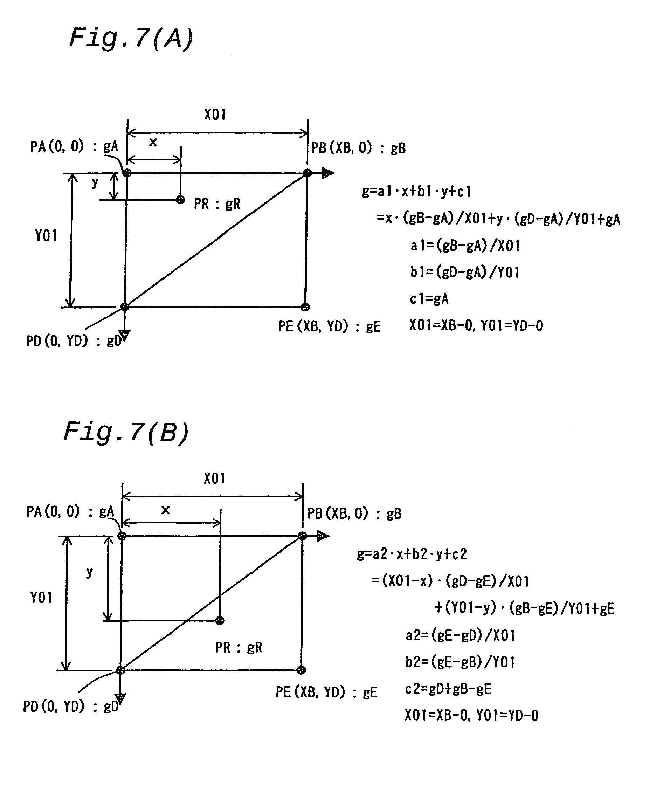

Figs. 7(A) and 7(B) show the gain calculation for pixels present in the first and second areas conducted in the gain calculator 270. As shown in Fig. 7(A), the pixel PA is used as the origin (0, 0) and the correction gain g of an arbitrary pixel P(x, y) present in the first area is calculated by interpolation using Equation (7):

$$g = a1 \cdot x + b1 \cdot y + c1 \quad \dots (7)$$

Defining the correction gains of the apex pixels PA, PB and PD as gA, gB and gD, the number of pixels between pixel PB and pixel PA as X01 (= XB - 0), and the number of lines between pixel PD and pixel PA as Y01 (= YD - 0), the constants a1, b1 and c1 can be represented by Equations (8a) - (8c):

$$a1 = (gB - gA)/X01 \quad \dots (8a)$$

$$b1 = (gD - gA)/Y01 \quad \dots (8b)$$

$$c1 = gA \quad \dots (8c)$$

Therefore, defining the red constants as ar1, br1 and cr1 and the blue constants as ab1, bb1 and cb1, it follows from Equation (7) that the equations for interpolating the red and blue correction gains gr and gb of an arbitrary pixel P (x, y) in the first area can be written:

$$gr = ar1 \cdot x + br1 \cdot y + cr1 \quad \dots (9a)$$

$$gb = ab1 \cdot x + bb1 \cdot y + cb1 \quad \dots (9b)$$

Defining the red correction gains of the apex pixels PA, PB and PD as gAr, gBr and gDr and defining the blue correction gains thereof as gAb, gBb and gDb, it follows from Equations (8a) - (8c) that the constants ar1, br1, cr1, ab1, bb1 and cb1 can be represented by Equations (10a) - (10f):

$$ar1 = (gBr - gAr)/X01 \qquad \dots (10a)$$

$$br1 = (gDr - gAr)/Y01 \qquad \dots (10b)$$

$$cr1 = gAr \qquad \dots (10c)$$

$$ab1 = (gBb - gAb)/X01 \qquad \dots (10d)$$

$$bb1 = (gDb - gAb)/Y01 \qquad \dots (10e)$$

$$cb1 = gAb \qquad \dots (10f)$$

The correction gains of the apex pixels PA, PB and PD can be obtained in advance using the correction gain determining procedure explained with regard to the first embodiment.

As shown in Fig. 7(B), defining pixel PA as the origin (0, 0), the correction gain g of an arbitrary pixel P present in the second area can be determined by interpolation using Equation (11):

$$g = a2 \cdot x + b2 \cdot y + c2 \qquad \dots (11)$$

Defining the correction gains of the apex pixels PB, PD and PE as gB, gD and gE, the constants a2, b2 and c2 can be represented by Equations (12a) - (12c):

$$a2 = (gE - gD)/X01 \dots (12a)$$

$$b2 = (gE - gB)/Y01 \dots (12b)$$

$$c2 = gD + gB - gE \qquad \dots (12c)$$

Therefore, defining the red constants as ar2, br2 and cr2 and the blue constants as ab2, bb2 and cb2, it follows from Equation (11) that the equations for interpolating the red and blue correction gains gr and gb of an arbitrary pixel P(x, y) in the second area can be written:

$$gr = ar2 \cdot x + br2 \cdot y + cr2 \qquad \dots (13a)$$

$$gb = ab2 \cdot x + bb2 \cdot y + cb2 \qquad \dots (13b)$$

Defining the red correction gains of the apex pixels PB, PD and PE as gBr, gDr and gEr and defining the blue correction gains thereof as gBb, gDb and gEb, it follows from Equations (12a) - (12c) that the constants ar2, br2, cr2, ab2, bb2 and cb2 can be represented by Equations (14a) (14f):

$$ar2 = (gEr - gDr)/X01 \qquad \dots (14a)$$

$$br2 = (gEr - gBr)/Y01 \qquad \dots (14b)$$

$$cr2 = gDr + gBr - gEr \qquad \dots (14c)$$

$$ab2 = (gEb - gDb)/X01 \qquad \dots (14d)$$

$$bb2 = (gEb - gBb)/Y01 \qquad \dots (14e)$$

$$cb2 = gDb + gBd - gEb \qquad \dots (14f)$$

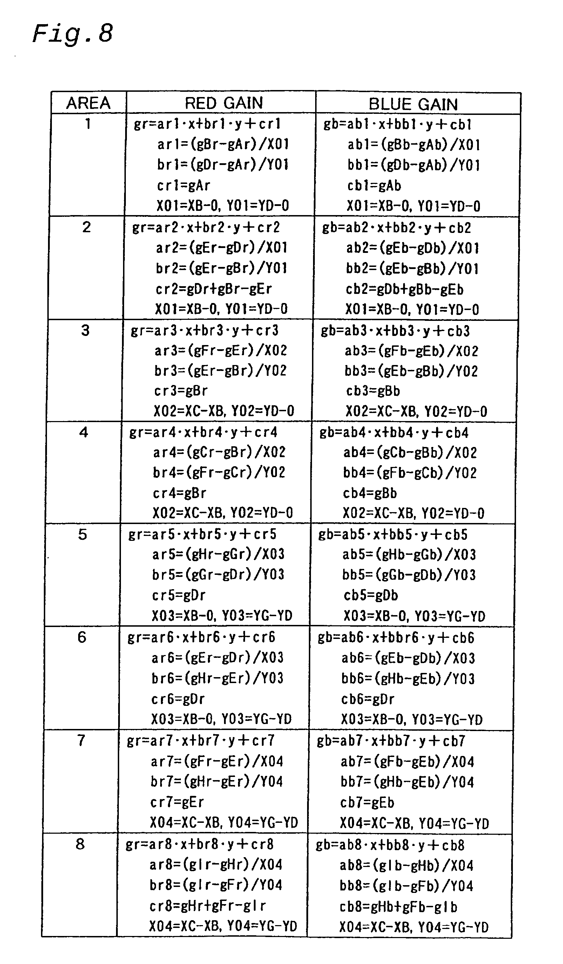

The correction gains of the segment pixels in the other areas can also be determined by interpolation from the correction gains of the apex pixels of the area, similarly to what was explained with regard to the first and second areas. Fig. 8 is diagram showing examples of correction gain interpolation equations and constants stored in the constant table 220A for the respective areas. The interpolation equations and constants shown in Fig. 8 are non-limitative examples. They can be replaced by any of various other interpolation equations and constants usable for interpolating the correction gains of the segment pixels from the apex pixels of the respective areas.

The gain calculator 270 thus determines the correction gains gr and gb for every pixel and supplies them to the red multiplier 240 and the blue multiplier 250.

The gain corrector 120A corrects given image data DS(R), DS(G) and DS(B) and outputs them as image data DCS(R), DCS(G) and DCS(B). The image represented by the image data DCS corrected by the gain corrector 120A is formed on the liquid crystal panel 160. As a result, an image suppressed in color unevenness is displayed.

In the second embodiment, the gain corrector 120A corrects the red and blue image data among the image data of every pixel so as to make their levels substantially equal to the level of the green image data. The color unevenness tending to occur in the displayed image can therefore be suppressed. Moreover, in the second embodiment, the pixels are divided into multiple areas beforehand and the correction gain of any given pixel present in an area is determined by interpolation from the correction gains of the apex pixels of the area. This is advantageous in not requiring the correction gains of all pixels to be calculated in advance. It is also advantageous in that it simplifies the procedure for determining the correction gains in advance and reduces the size of the constant table for storing data corresponding to the determined correction gains.

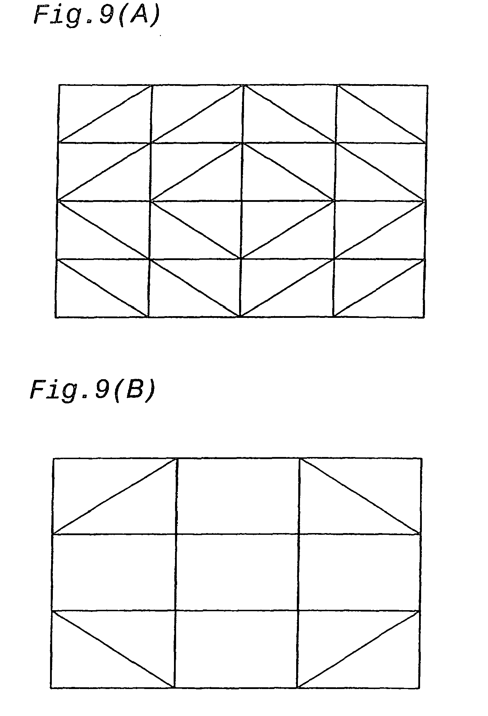

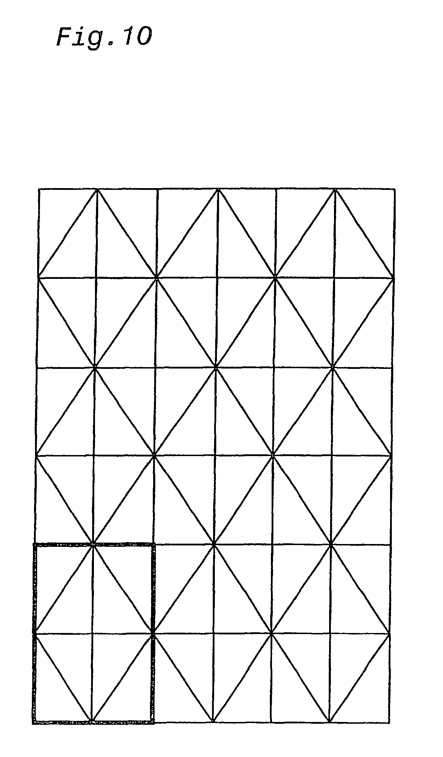

As shown in Fig. 5, the second embodiment defines the eight areas using the vertical line connecting pixels PB, PE and PH, the horizontal line connecting the pixels PD, PE and PF, and the sides of the rhombus having pixels PB, PD, PH and PF as its apexes. The distribution of color unevenness is generally such that the unevenness spreads radially outward from the image center toward the image periphery, and the area segmentation of the second embodiment is an example for coping with this distribution. However, the invention is not limited to this segmentation. For example, one of the segmentations shown in Figs. 9 and 10 can be adopted. So long as the area segmentation is matched to the color unevenness distribution so as to enable the color unevenness within the areas to be suppressed by interpolation of pixel image data, it is not limited with respect to the number or shape of the segments. The area pattern illustrated in Fig. 10 is what is obtained by using the set of areas of Fig. 5 as a unit for dividing the image horizontally and vertically into multiple identical sets. As this pattern enables the correction processing to be conducted by repeating the same processing for each set, it makes the correction processing easier.

It is also possible to provide plural sets of the area detector 260 and the multiple gain calculator 270 for plural area segmentation patterns, provide means for selecting one set among them, and select an area segmentation pattern according to the color unevenness distribution characteristics of the display. By this, color unevenness can be suppressed with higher precision in accordance with various color unevenness characteristics arising in different displays.

The present invention is defined in the appended claims. For example, the following modifications are also possible.

(1) Although the foregoing embodiments were explained taking a projection display as an example, the invention can also be applied to a direct viewing display.

(2) Although the foregoing embodiments were explained taking an image display that uses a liquid crystal panel as an example, the invention is not limited in application to such a display but can also be applied to a display equipped with a PDM, DMD, CRT or any of various other display devices.

## Claims

1. An image display method comprising the steps of:

    (a) providing image data including plural color component data (DS(R), DS(G), DS(B));
    (b) correcting levels of said plural color component data (DCS(R), DCS(G), (DCS(B)); and
    (c) producing light representing a color image at a plurality of pixels of an image display device (1000) in accordance with the correct image data, the pixels each emitting light for forming the color image;
    wherein the step (b) includes the steps of determining the position of the pixels to be corrected, and correcting the level of at least one of the plural color component data applied to the pixels in accordance with the positions of the pixels using correction values determined to reduce difference in chromaticity of light exiting from the pixels; **characterised in that** the luminance level of said at least one of the plural color component data applied to said individual pixels in accordance with the positions of the pixels is corrected, wherein the step of correcting the luminance level of said at least one of the plural color component data includes the step of correcting the luminance levels of all but a specific one of the plural color component data applied to the pixels to reduce difference in luminance level between the specific color component data and the other color component data of said plural color component data, wherein the specific color component data is the type of color component data that makes the greatest contribution to the luminance of the light for forming the image, and wherein the luminance level of said specific one of said plural color component data is taken as a reference luminance level in the correction of the luminance levels of the other color component data such that, when image data representing an image of a uniform color are output from the image processor, difference in chromaticity of light exiting from the pixels is reduced among the pixels.

2. An image display method according to claim 1, wherein the plural color component data are red, green and blue component data and the specific color component data is the green component data.

3. An image display method according to claim 1 or 2, wherein the plurality of pixels are segmented into a plurality of small areas of polygonal shape;
    correction values for apex pixels corresponding to apexes of the small blocks are determined in advance; and
    correction values of pixels other than the apex pixels in each small area are interpolated from the correction values of the apex pixels of the small area.

4. An image display method according to claim 3, wherein the plurality of pixels are segmented into the plurality of small areas by drawing a horizontal line through a center pixel among the multiple pixels, drawing a vertical line through the center pixel, and drawing the sides of a rhombus whose apexes are the extremities of the horizontal line and the vertical line.

5. An image display apparatus (1000) comprising:

    an image processor (130) for outputting an image data including plural color component data;
    a gain corrector (120, 120A) for correcting luminance levels of the image data output by the image processor; and
    an image display device (180) having a plurality of pixels from each of whose pixels light for forming a color image exits in accordance with the corrected image data corrected by the gain corrector;

storing means (220, 220A) adapted to store correction values to be used in correcting the luminance level of said at least one of said plural color component data of said image data applied to the individual pixels of said image display device;

pixel position determining means (210) adapted to determine a position of a pixel to be corrected; and

correcting means (230, 240, 250, 270) adapted to determine a correction value to be applied to the luminance level of said at least one of said plural color component data according to the method of any preceding claim.

**Patentansprüche**

1. Bildanzeigeverfahren, das die Schritte aufweist:

   (a) Bereitstellen von Bilddaten, die mehrere Farbkomponentendaten (DS(R), DS(G), DS(B)) umfassen;
   (b) Korrigieren von Höhen bzw. Levels der mehreren Farbkomponentendaten (DCS(R), DCS(G), (DCS(B)); und
   (c) Erzeugen von Licht, das ein Farbbild an einer Anzahl von Pixeln auf einem Bildanzeigegerät (1000) gemäß den korrekten Bilddaten darstellt, wobei jedes der Pixel Licht zum Bilden des Farbbildes aussendet;
   wobei der Schritt (b), die Schritte der Bestimmung der Position der zu korrigierenden Pixel, und die Korrektur der Höhe zumindest eines der mehreren Farbkomponentendaten, die auf die Pixel gemäß der Positionen der Pixel angewandt sind unter Verwendung von Korrekturwerten, die bestimmt sind, um Chromazitätsunterschiede in von den Pixeln ausgehendem Licht zu reduzieren, umfasst;
   **dadurch gekennzeichnet, dass** das Luminanzniveau des zumindest einen der mehreren Farbkomponentendaten, die auf die individuellen Pixel gemäß den Positionen der Pixel angewandt sind, korrigiert wird, wobei der Schritt der Korrektur des Luminanzniveaus des zumindest einen der mehreren Farbkomponentendaten den Schritt der Berichtigung des Luminanzniveaus von allen, außer einem speziellen eines der mehreren Farbkomponentendaten, die auf die Pixel angewandt sind, um einen Luminanzniveau-Unterschied zwischen den speziellen Farbkomponentendaten und den anderen Farbkomponentendaten der mehreren Farbkomponentendaten zu reduzieren, umfasst, wobei die spezifischen Farbkomponentendaten von der Art der Farbkomponenten ist, die den größten Beitrag zu der Luminanz des Lichtes zum Bilden des Bildes beiträgt, und wobei das Luminanzniveau des spezifischen einen der mehreren Farbkomponentendaten als Referenz-Luminanzniveau bei der Korrektur des Luminanzniveaus der anderen Farbkomponenten genommen wird, so dass, wenn Bilddaten, die ein Bild einer uniformen bzw. eintönigen Farbe darstellen, von dem Bildprozessor ausgegeben werden, Chromatizitätsunterschiede von Licht, das von den Pixeln ausgeht, unter den Pixeln reduziert wird.

2. Bildanzeigeverfahren nach Anspruch 1, wobei die mehreren Farbkomponentendaten rote, grüne und blaue Komponentendaten sind und die spezifischen Farbkomponentendaten die grünen Komponentendaten sind.

3. Bildanzeigeverfahren nach Anspruch 1 oder 2, wobei die Anzahl der Pixel in eine Anzahl von kleinen Flächen bzw. Bereichen polygonaler Form segmentiert ist;
   Korrekturwerte für Apex-Pixel, die den Apizes der kleinen Blöcke entsprechen, im Voraus bestimmt werden; und
   Korrekturwerte der Pixel, welche andere als die Apex-Pixel in jedem kleinen Bereich sind, von den Korrekturwerten der Apex-Pixel der kleinen Flächen interpoliert werden.

4. Bildanzeigeverfahren nach Anspruch 3, wobei die Anzahl von Pixeln in die Anzahl von kleinen Bereichen durch Zeichnen einer Horizontallinie durch ein Zentralpixel zwischen bzw. unter den mehreren bzw. vielfachen Pixeln, zeichnen einer vertikalen Linie durch das Zentralpixel, und Zeichnen der Seiten eines Rhombus, dessen Apizes die Endpunkte der horizontalen Linie und der vertikalen Linie sind, segmentiert wird.

5. Bildanzeigegerät (1000) aufweisend:

   einen Bildprozessor (130) zur Ausgabe eines Bilddatums bzw. von Bilddaten einschließlich mehrerer Bildkomponentendaten;
   einen Verstärkerkorrektor (120, 120A) zur Korrektur von Luminanzniveaus der Bilddaten, die durch den Bildprozessor ausgegeben werden; und
   eine Bildanzeigevorrichtung (180) mit einer Anzahl von Pixeln, wobei von jedem dieser Pixel Licht zum Bilden eines Farbbildes gemäß den korrigierten Bilddaten, die durch den Verstärkerkorrektor korrigiert sind, ausgeht;
   Speichermittel (220, 220A), die eingerichtet sind, um Korrekturwerte zu speichern, die bei Korrektur des Luminanzniveaus des zumindest einen der mehreren Farbkomponentendaten der Bilddaten, die auf die individuellen Pixel der Bildanzeigevorrichtung angewandt sind, verwendet werden sollen;

Pixelpositionsbestimmungsmittel (210), die eingerichtet sind, um eine Position eines zu korrigierenden Pixels zu bestimmen; und

Korrekturmittel (230, 240, 250, 270), die eingerichtet sind, um einen Korrekturwert zu bestimmen, der auf das Luminanzniveau des zumindest eines der Farbkomponentendaten gemäß dem Verfahren nach einem der vorstehenden Ansprüche angewendet werden soll.

**Revendications**

1. Procédé d'affichage d'images comportant les étapes consistant à :

    (a) fournir des données d'image incluant une pluralité de données de composantes de couleur (DS(R), DS(G), DS(B)) ;
    (b) mettre en corrélation des niveaux de ladite pluralité de données de composantes de couleur (DCS(R), DCS(G), DCS(B)) ; et
    (c) produire une lumière représentant une image de couleur à une pluralité de pixels d'un dispositif d'affichage d'images (1000) conformément aux données d'image correctes, chaque pixel émettant une lumière pour former l'image de couleur ;
    dans lequel l'étape (b) inclut les étapes consistant à déterminer la position des pixels à corriger, et à corriger le niveau d'au moins une donnée parmi la pluralité de données de composantes de couleur appliquées aux pixels conformément aux positions des pixels en utilisant des valeurs de correction déterminées pour réduire une différence en termes de chromaticité de lumière sortant des pixels ; **caractérisé en ce que** le niveau de luminance de ladite au moins une donnée parmi la pluralité de données de composantes de couleur appliquées auxdits pixels individuels conformément aux positions des pixels est corrigé, dans lequel l'étape consistant à corriger le niveau de luminance de ladite au moins une donnée parmi la pluralité de données de composantes de couleur inclut l'étape consistant à corriger les niveaux de luminance d'une seule donnée spécifique parmi la pluralité de données de composantes de couleur appliquée aux pixels pour réduire une différence de niveau de luminance entre les données de composantes de couleur spécifiques et les autres données de composantes de couleur de ladite pluralité de données de composantes de couleur, dans lequel les données de composantes de couleur spécifique sont le type de données de composantes de couleur qui génère la contribution la plus élevée à la luminance de la lumière pour former l'image, et dans lequel le niveau de luminance de ladite données spécifique parmi ladite pluralité de données de composantes de couleur est pris en tant que niveau de luminance de référence lors de la correction des niveaux de luminance des autres données de composantes de couleur de sorte que, lorsque des données d'images représentant une image d'une couleur uniforme sont délivrées en sortie par le processeur d'images, une différence en termes de chromaticité de lumière sortant des pixels est réduite entre les pixels.

2. Procédé d'affichage d'images selon la revendication 1, dans lequel la pluralité de données de composantes de couleur sont des données de composantes rouge, verte et bleue et les données de composantes de couleur spécifiques sont les données de composante verte.

3. Procédé d'affichage d'images selon la revendication 1 ou 2, dans lequel la pluralité de pixels sont segmentés en une pluralité de petites zones de forme polygonale ;
    des valeurs de correction pour des pixels de sommet correspondant à des sommets des petits blocs sont déterminées à l'avance ; et
    des valeurs de correction de pixels autres que les pixels de sommet dans chaque petite zone sont interpolées à partir des valeurs de correction des pixels de sommet de la petite zone.

4. Procédé d'affichage d'images selon la revendication 3, dans lequel la pluralité de pixels sont segmentés en la pluralité de petites zones en dessinant une ligne horizontale à travers un pixel central parmi les multiples pixels, en dessinant une ligne verticale à travers le pixel central, et en dessinant les côtés d'un losange dont les sommets sont les extrémités de la ligne horizontale et de la ligne verticale.

5. Dispositif d'affichage d'images (1000) comportant :

    un processeur d'images (130) pour délivrer en sortie des données d'images incluant une pluralité de données de composantes de couleur ;
    un correcteur de gain (120, 120A) pour corriger des niveaux de luminance des données d'images délivrées en sortie par le processeur d'images ; et

un dispositif d'affichage d'images (180) ayant une pluralité de pixels depuis chacun desquels une lumière pour former une image de couleur sort conformément aux données d'images corrigées corrigées par le correcteur de gain ;

des moyens de mémorisation (220, 220A) adaptés pour mémoriser les valeurs de correction à utiliser pour corriger le niveau de luminance de ladite au moins une donnée parmi ladite pluralité de données de composantes de couleur desdites données d'images appliquées aux pixels individuels dudit dispositif d'affichage d'images ;

des moyens de détermination de position de pixels (210) adaptés pour déterminer une position d'un pixel à corriger ; et

des moyens de correction (230, 240, 250, 270) adaptés pour déterminer une valeur de correction à appliquer au niveau de luminance de ladite au moins une donnée parmi ladite pluralité de données de composantes de couleur conformément au procédé selon l'une quelconque des revendications précédentes.

EP 1 061 500 B1

*Fig.1*

1000

EP 1 061 500 B1

*Fig.2*

120

*Fig.3(A)*

(0, 0)

P2
⊕

R:40×Kr

G:45×Kg          P1
                 ⊕
B:55×Kb
                 R:50×Kr

                 G:50×Kg

                 B:50×Kb

x

y

*Fig.3(B)*

| | SIGNAL LEVEL | | CORRECTION FACTOR (GAIN) | | LUMINANCE LEVEL CHANGE (FILTER CHARACTERISTICS) | | LUMINANCE LEVEL |
|---|---|---|---|---|---|---|---|
| METHOD 1 | DS(R) : 50 | ⇨ | × (50/40) | ⇨ | × (40/50) | ⇨ | R:50×Kr |
| | DS(G) : 50 | | × (50/45) | | × (45/50) | | G:50×Kg |
| | DS(B) : 50 | | × (50/55) | | × (55/50) | | B:50×Kb |
| METHOD 2 (EMBODIMENT) | DS(R) : 50 | ⇨ | × (45/40) | ⇨ | × (40/50) | ⇨ | R:45×Kr |
| | DS(G) : 50 | | ×1 | | × (45/50) | | G:45×Kg |
| | DS(B) : 50 | | × (45/55) | | × (55/50) | | B:45×Kb |

*Fig.4*

EP 1 061 500 B1

## Fig.5

PA (0, 0)　　　　　　PB (XB, 0)　　　　　PC (XC, 0)

FIRST AREA　　　　　　　FOURTH AREA

PLS=001 | PLS=010

PLS=000　　　　　　　　　　　　PLS=011

SECOND AREA　THIRD AREA

PD (0, YD)　　　　　　　　PE (XB, YD)　　　　PF (XC, YD)

SIXTH AREA　　SEVENTH AREA

PLS=100

PLS=101　　PLS=110　　PLS=111

FIFTH AREA　　　　　　　　EIGHTH AREA

PG (0, YG)　　　　　　　PH (XB, YG)　　　　PI (XC, YG)

x

y

EP 1 061 500 B1

*Fig.6(A)*

$$L1 : y=-(Y01/X01)\cdot x+Y01$$

FIRST AREA
$$y-(-(Y01/X01)\cdot x+Y01)<0$$

SECOND AREA
$$y-(-(Y01/X01)\cdot x+Y01)\geqq 0$$

*Fig.6(B)*

$$L2 : y=(Y02/X02)\cdot x$$

THIRD AREA
$$y-(Y02/X02)\cdot x\geqq 0$$

FOURTH AREA
$$y-(Y02/X02)\cdot x<0$$

## Fig.7(A)

$g=a1 \cdot x+b1 \cdot y+c1$

$=x \cdot (gB-gA)/X01+y \cdot (gD-gA)/Y01+gA$

$a1=(gB-gA)/X01$

$b1=(gD-gA)/Y01$

$c1=gA$

$X01=XB-0, \ Y01=YD-0$

## Fig.7(B)

$g=a2 \cdot x+b2 \cdot y+c2$

$=(X01-x) \cdot (gD-gE)/X01$

$+(Y01-y) \cdot (gB-gE)/Y01+gE$

$a2=(gE-gD)/X01$

$b2=(gE-gB)/Y01$

$c2=gD+gB-gE$

$X01=XB-0, \ Y01=YD-0$

20

## Fig.8

| AREA | RED GAIN | BLUE GAIN |
|---|---|---|
| 1 | $gr=ar1 \cdot x+br1 \cdot y+cr1$<br>$ar1=(gBr-gAr)/X01$<br>$br1=(gDr-gAr)/Y01$<br>$cr1=gAr$<br>$X01=XB-0, Y01=YD-0$ | $gb=ab1 \cdot x+bb1 \cdot y+cb1$<br>$ab1=(gBb-gAb)/X01$<br>$bb1=(gDb-gAb)/Y01$<br>$cb1=gAb$<br>$X01=XB-0, Y01=YD-0$ |
| 2 | $gr=ar2 \cdot x+br2 \cdot y+cr2$<br>$ar2=(gEr-gDr)/X01$<br>$br2=(gEr-gBr)/Y01$<br>$cr2=gDr+gBr-gEr$<br>$X01=XB-0, Y01=YD-0$ | $gb=ab2 \cdot x+bb2 \cdot y+cb2$<br>$ab2=(gEb-gDb)/X01$<br>$bb2=(gEb-gBb)/Y01$<br>$cb2=gDb+gBb-gEb$<br>$X01=XB-0, Y01=YD-0$ |
| 3 | $gr=ar3 \cdot x+br3 \cdot y+cr3$<br>$ar3=(gFr-gEr)/X02$<br>$br3=(gEr-gBr)/Y02$<br>$cr3=gBr$<br>$X02=XC-XB, Y02=YD-0$ | $gb=ab3 \cdot x+bb3 \cdot y+cb3$<br>$ab3=(gFb-gEb)/X02$<br>$bb3=(gEb-gBb)/Y02$<br>$cb3=gBb$<br>$X02=XC-XB, Y02=YD-0$ |
| 4 | $gr=ar4 \cdot x+br4 \cdot y+cr4$<br>$ar4=(gCr-gBr)/X02$<br>$br4=(gFr-gCr)/Y02$<br>$cr4=gBr$<br>$X02=XC-XB, Y02=YD-0$ | $gb=ab4 \cdot x+bb4 \cdot y+cb4$<br>$ab4=(gCb-gBb)/X02$<br>$bb4=(gFb-gCb)/Y02$<br>$cb4=gBb$<br>$X02=XC-XB, Y02=YD-0$ |
| 5 | $gr=ar5 \cdot x+br5 \cdot y+cr5$<br>$ar5=(gHr-gGr)/X03$<br>$br5=(gGr-gDr)/Y03$<br>$cr5=gDr$<br>$X03=XB-0, Y03=YG-YD$ | $gb=ab5 \cdot x+bb5 \cdot y+cb5$<br>$ab5=(gHb-gGb)/X03$<br>$bb5=(gGb-gDb)/Y03$<br>$cb5=gDb$<br>$X03=XB-0, Y03=YG-YD$ |
| 6 | $gr=ar6 \cdot x+br6 \cdot y+cr6$<br>$ar6=(gEr-gDr)/X03$<br>$br6=(gHr-gEr)/Y03$<br>$cr6=gDr$<br>$X03=XB-0, Y03=YG-YD$ | $gb=ab6 \cdot x+bbr6 \cdot y+cb6$<br>$ab6=(gEb-gDb)/X03$<br>$bb6=(gHb-gEb)/Y03$<br>$cb6=gDr$<br>$X03=XB-0, Y03=YG-YD$ |
| 7 | $gr=ar7 \cdot x+br7 \cdot y+cr7$<br>$ar7=(gFr-gEr)/X04$<br>$br7=(gHr-gEr)/Y04$<br>$cr7=gEr$<br>$X04=XC-XB, Y04=YG-YD$ | $gb=ab7 \cdot x+bb7 \cdot y+cb7$<br>$ab7=(gFb-gEb)/X04$<br>$bb7=(gHb-gEb)/Y04$<br>$cb7=gEb$<br>$X04=XC-XB, Y04=YG-YD$ |
| 8 | $gr=ar8 \cdot x+br8 \cdot y+cr8$<br>$ar8=(gIr-gHr)/X04$<br>$br8=(gIr-gFr)/Y04$<br>$cr8=gHr+gFr-gIr$<br>$X04=XC-XB, Y04=YG-YD$ | $gb=ab8 \cdot x+bb8 \cdot y+cb8$<br>$ab8=(gIb-gHb)/X04$<br>$bb8=(gIb-gFb)/Y04$<br>$cb8=gHb+gFb-gIb$<br>$X04=XC-XB, Y04=YG-YD$ |

Fig.9(A)

Fig.9(B)

Fig.10

EP 1 061 500 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0402137 A
- US 5359342 A
- JP 10171045 A